# EUROPEAN PATENT APPLICATION

(11) **EP 4 391 153 A1**
(43) Date of publication of application: **26.06.2024**
(21) Application number: 23219915.8
(22) Date of filing: 22.12.2023
(51) Int. Cl.: H01M 10/613, H01M 10/653, H01M 10/6551, H01M 10/6554, H01M 10/6556, H01M 10/658, H01M 50/24, H01M 50/271

(54) **PROTECTIVE ENCLOSURE, ENERGY-STORAGE APPARATUS, AND ELECTRICITY-CONSUMPTION DEVICE**

(30) Priority: 22.12.2022 CN 202211655574
(71) Applicant: Shenzhen Ampere Time Digital Energy Technology Co., Ltd., Shenzhen, Guangdong 518100 (CN)
(72) Inventor: LU, Haijun, Shenzhen, 518110 (CN); HE, Lixin, Shenzhen, 518110 (CN); HU, Zhiyong, Shenzhen, 518110 (CN); WANG, Jianchun, Shenzhen, 518110 (CN)
(74) Representative: Mewburn Ellis LLP

(57) **Abstract**

A protective enclosure, an energy-storage apparatus, and an electricity-consumption device are provided in the present disclosure. The protective enclosure includes a main housing and a heat-conducting member. The main housing defines a heat-conducting hole. The heat-conducting hole extends through the main housing in a thickness direction of the main housing. The heat-conducting member is mounted at an inner side of the main housing, is integrated with the main housing, and covers the heat-conducting hole. According to the technical scheme of the present disclosure, heat dissipation efficiency of the energy-storage apparatus can be improved, service life of the energy-storage apparatus can be prolonged, and use reliability of the electricity-consumption device can be improved.

## Description

### TECHNICAL FIELD

This disclosure relates to the field of battery technology, and in particular to a protective enclosure, an energy-storage apparatus, and an electricity-consumption device.

### BACKGROUND

The energy-storage apparatuses generate a large amount of heat during use, and at present, the heat is mainly dissipated to external environment through protective enclosures of the energy-storage apparatuses. However, a protective enclosure of an existing energy-storage apparatus is generally made of plastic. The plastic has poor thermal conductivity, and cannot dissipate a large amount of heat to the external environment in time, which leads to an increase of heat inside the energy-storage apparatus and formation of closed high-temperature environment, thereby shortening service life of the energy-storage apparatus and affecting use reliability of the electricity-consumption device.

### SUMMARY

A protective enclosure, an energy-storage apparatus, and an electricity-consumption device are provided in implementations of the present disclosure. Heat dissipation efficiency of the energy-storage apparatus can be improved, service life of the energy-storage apparatus can be prolonged, and use reliability of the electricity-consumption device can be improved.

In a first aspect, a protective enclosure is provided in the present disclosure. The protective enclosure is applied to an energy-storage apparatus, and includes a main housing and a heat-conducting member. The main housing defines a heat-conducting hole. The heat-conducting hole extends through the main housing in a thickness direction of the main housing. The heat-conducting member is mounted at an inner side of the main housing, is integrated with the main housing, and covers the heat-conducting hole.

In an implementation, an inner surface of the heat-conducting member is flush with an inner surface of the main housing.

In an implementation, the heat-conducting hole is implemented as multiple heat-conducting holes arranged at intervals, and the multiple heat-conducting holes include multiple first heat-conducting holes and multiple second heat-conducting holes. The main housing includes a bottom housing and a side housing. The bottom housing defines multiple first heat-conducting holes. The side housing is disposed around the bottom housing and is fixedly connected to the bottom housing. The side housing defines multiple second heat-conducting holes. The multiple second heat-conducting holes are defined at part of the side housing close to the bottom housing. The heat-conducting member includes a body portion and the side portion. The body portion is mounted at an inner side of the bottom housing and covers the multiple first heat-conducting holes. The side portion is disposed around the body portion, is mounted at an inner side of the side housing, and covers the multiple second heat-conducting hole.

In an implementation, the body portion is in a shape of a Chinese character " 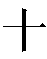 ". The body portion includes two first end-portions and two second end-portions. The two first end-portions are disposed opposite to each other, the two second end-portions are disposed opposite to each other and between the two first end-portions. The side portion includes two first side sub-portions and two second side sub-portions. The two first side sub-portions are fixedly connected to the two first end-portions respectively and are intersected with the body portion. The two second side sub-portions are fixedly connected to the two second end-portions respectively and are intersected with the body portion.

In an implementation, the heat-conducting member defines a recess. The recess is recessed from an inner surface of the heat-conducting member towards an outer surface of the heat-conducting member. The recess is completely in the main housing and is between the inner surface of the main housing and the outer surface of the main housing.

In an implementation, the recess is implemented as multiple recesses. The multiple recesses are arranged at intervals.

In an implementation, the recess defines a through hole. The through hole extends through the recess in a thickness direction of the recess. Part of the main housing passes through the through hole.

In an implementation, the protective enclosure further includes an upper housing. The upper housing is detachably mounted at a top side of the main housing.

In an implementation, the main housing is provided with a first boss. The first boss is disposed at a top side of the main housing and around a periphery of the main housing. The first boss defines an overflow groove. An opening of the overflow groove is on a top surface of the first boss. The overflow groove is defined around the periphery of the main housing. The upper housing is provided with a second boss. The second boss is disposed at a bottom side of the upper housing and around a periphery of the upper housing. The second boss defines a gluing groove. An opening of the gluing groove is on a bottom surface of the second boss. The gluing groove is defined around the periphery of the upper housing. The gluing groove has a first groove side-wall, a second groove side-wall, and a groove bottom-wall. The first groove side-wall and the second groove side-wall are spaced apart from and opposite to each other. The groove bottom-wall is connected between the first groove side-wall and the second groove side-wall. When the upper housing is detachably mounted at the top side of the main housing, the bottom surface of the second boss is configured to abut against the top surface of the first boss. The first groove side-wall is spaced apart from an inner surface of the main housing. The second groove side-wall is spaced apart from an outer surface of the main housing. The groove bottom-wall is spaced apart from a top surface of the main housing.

In an implementation, the main housing is provided with a first locking portion. The first locking portion is disposed at the outer surface of the main housing and between the top surface of the main housing and the top surface of the first boss. The second boss is provided with a second locking portion. The second locking portion is disposed at the second groove side-wall. When the upper housing is detachably mounted at the top side of the main housing, the first locking portion and the second locking portion are detachably interlocked with each other.

In an implementation, the first locking portion is implemented as multiple first locking portions. The multiple first locking portions are disposed around the periphery of the main housing at intervals. The second locking portion is implemented as multiple second locking portions. The multiple second locking portions are disposed around a periphery of the upper housing at intervals. When the upper housing is detachably mounted at the top side of the main housing, the multiple first locking portions are detachably interlocked with the multiple second locking portions in a one-to-one correspondence.

In an implementation, the first locking portion is a slot. An opening of the slot is on the outer surface of the main housing. The second locking portion is a protrusion protruding from a second groove side-wall to the first groove side-wall. When the upper housing is detachably mounted at the top side of the main housing, the protrusion is detachably snapped into the slot.

In an implementation, the upper housing is provided with two handles. The two handles are disposed at two opposite sides of the upper housing respectively.

In an implementation, the main housing is made of plastic. The heat-conducting member is made of a metal material.

In a second aspect, an energy-storage apparatus is further provided in the present disclosure. The energy-storage apparatus includes multiple cells and the above protective enclosure. The multiple cells are mounted at an inner side of the protective enclosure and in contact with the heat-conducting member.

In a third aspect, an electricity-consumption device is further provided in the present disclosure. The electricity-consumption device includes the above energy-storage apparatus.

In implementations of the present disclosure, the heat-conducting member is integrated with the main housing by injection, and the heat-conducting holes are defined in the main housing. On the one hand, the heat-conducting member can improve structural strength of a lower housing to ensure a protective performance of the protective enclosure; and on the other hand, the heat-conducting member has good thermal conductivity, and can quickly conduct heat inside the energy-storage apparatus to external environment via the heat-conducting holes, such that the heat dissipation efficiency of the protective enclosure can be improved, the service life of the energy-storage apparatus can be prolonged, and the use reliability of the electricity-consumption device can be improved.

### BRIEF DESCRIPTION OF THE DRAWINGS

To describe technical solutions in implementation of the present disclosure more clearly, the following describes the accompanying drawings required for describing implementations of the present disclosure.
FIG. 1 is a schematic structural diagram of an energy-storage apparatus in an implementation of the present disclosure.
FIG. 2 is an exploded schematic structural diagram of a protective enclosure of the energy-storage apparatus illustrated in FIG. 1 in an implementation.
FIG. 3 is a schematic structural diagram of a heat-conducting member in the protective enclosure illustrated in FIG. 2.
FIG. 4 is a schematic cross-sectional structural diagram of a lower housing in the protective enclosure illustrated in FIG. 2 cut along A-A.
FIG. 5 is a schematic structural diagram of a lower housing in the protective enclosure illustrated in FIG. 2 from another angle.
FIG. 6 is a schematic cross-sectional structural diagram of a lower housing in the protective enclosure illustrated in FIG. 2 cut along B-B.
FIG. 7 is a schematic structural diagram of an upper housing in the protective enclosure illustrated in FIG. 2 from another angle.
FIG. 8 is a structural cross-sectional schematic diagram of the energy-storage apparatus illustrated in FIG. 1 cut along C-C.
FIG. 9 is an exploded schematic structural diagram of a protective enclosure of the energy-storage apparatus illustrated in FIG. 1 in another implementation.
FIG. 10 is a structural schematic diagram of a heat-conducting member of the lower housing in the protective enclosure illustrated in FIG. 9.
FIG. 11 is a schematic cross-sectional structural diagram of a lower housing in the protective enclosure in FIG. 9 cut along D-D.
FIG. 12 is a schematic cross-sectional structural diagram of a lower housing in the protective enclosure in FIG. 9 cut along E-E.

### DETAILED DESCRIPTION

Implementations of the present disclosure will be clearly described hereinafter in conjunction with the drawings.

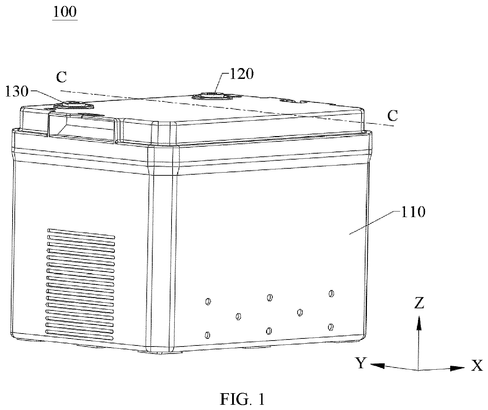

Referring to FIG. 1, FIG. 1 is a schematic structural diagram of an energy-storage apparatus 100 in an implementation of the present disclosure. For ease of description, a length direction of the energy-storage apparatus 100 is defined as an X-axis direction, a width direction of the energy-storage apparatus 100 is defined as a Y-axis direction, a height direction of the energy-storage apparatus 100 is defined as a Z-axis direction, and the X-axis direction, the Y-axis direction, and the Z-axis direction are perpendicular to one another.

In an implementation of the present disclosure, the energy-storage apparatus 100 may be an apparatus with a function of storing power, such as a battery module, a battery pack, or a battery system. Exemplarily, the energy-storage apparatus 100 is a battery module. The energy-storage apparatus 100 may include a protective enclosure 110, a cell unit (not shown), a positive terminal 120, and a negative terminal 130. The cell unit is mounted in the protective enclosure 110. The cell unit includes multiple cells, and the multiple cells may be arranged in series, or the multiple cells may be arranged in parallel, or some cells are arranged in series and some cells are arranged in parallel. An implementation of the present disclosure is not particularly limited in this regard.

The positive terminal 120 and the negative terminal 130 are both mounted on the protective enclosure 110, and exceed the protective enclosure 110 to be connected to an external apparatus or an external device to supply power to the external apparatus or the external device. In the X-axis direction, the positive terminal 120 and the negative terminal 130 are spaced apart from each other on two sides of the energy-storage apparatus 100. The protective enclosure 110 has a protective function and a sealing function, and can prevent moisture and impurities in an external environment from entering the inside of the energy-storage apparatus 100, so as to protect the cell unit located in the protective enclosure 110, such that the energy-storage apparatus 100 can be applicable to various operating environments.

It should be noted that terms such as "external" or "outer" and "internal" or "inner" mentioned in the description of the energy-storage apparatus 100 in an implementation of the present disclosure are described by using an orientation of the energy-storage apparatus 100 illustrated in FIG. 1, with one side away from the inside of the protective enclosure 110 being "external" or "outer" and one side facing the inside of the protective enclosure 110 being "internal" or "inner". Similar descriptions can be understood similarly hereinafter.

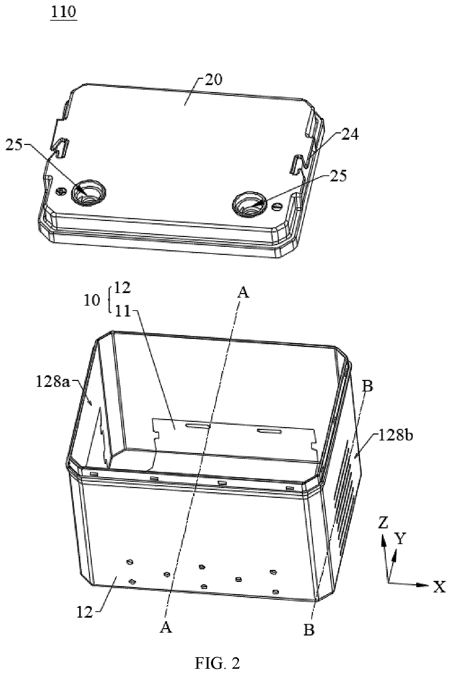

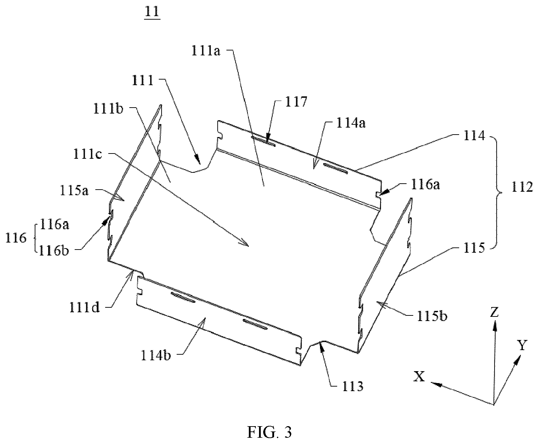

Referring to FIG. 2 and FIG. 3, FIG. 2 is an exploded schematic structural diagram of a protective enclosure 110 of the energy-storage apparatus 100 illustrated in FIG. 1 in an implementation, and FIG. 3 is a schematic structural diagram of a heat-conducting member 11 in the protective enclosure 110 illustrated in FIG. 2.

The protective enclosure 110 includes a lower housing 10 and an upper housing 20. The upper housing 20 is detachably mounted at a top side of the lower housing 10, and the upper housing 20 and the lower housing 10 cooperatively define an accommodating cavity (not shown). The accommodating cavity can accommodate the cell unit. In this implementation, the lower housing 10 includes a heat-conducting member 11 and a main housing 12. The heat-conducting member 11 is mounted at an inner side of the main housing 12, is integrated with the main housing 12, and is in contact with multiple cells. Exemplarily, the heat-conducting member 11 is integrated with the main housing 12 by an in-mold injection-molding process.

It should be noted that orientational terms such as "top" and "bottom" involved in the present disclosure are described with reference to the orientation illustrated in FIG. 1, with an orientation towards a positive direction of Z axis being "top" and an orientation towards a negative direction of Z axis "bottom", which does not indicate or imply that the device or element referred to must have a specific orientation, and be constructed and operated in a specific orientation, and therefore cannot be understood as a limitation to the present disclosure.

In this implementation, the heat-conducting member 11 may be made of a metal material with good thermal conductivity. Exemplarily, the material of the heat-conducting member 11 may be aluminum, aluminum alloy, copper, copper alloy, silver, silver alloy, or the like. The heat-conducting member 11 includes a body portion 111 and a side portion 112 that are integrated with each other. The side portion 112 is disposed around a peripheral side of the body portion 111 and extends in a direction away from the body portion 111 (the positive direction of Z axis that is illustrated in the figure). Exemplarily, the side portion 112 and the body portion 111 may be integrated with each other by a bending process, or may be integrated with each other by a stamping process.

In this implementation, the body portion 111 is substantially in a shape of a Chinese character " 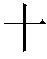 ". The body portion 111 includes two first end-portions 111a and two second end-portions 111b. In the Y-axis direction, the two first end-portions 111a are disposed opposite to each other. In the X-axis direction, the two second end-portions 111b are disposed opposite to each other and between the two first end-portions 111a. Each of the two first end-portions 111a and each of the two second end-portions 111b defines a chamfer 113 therebetween. In this implementation, the body portion 111 has four chamfers 113, and the four chamfers 113 are spaced apart from one another. In addition, the body portion 111 further has a first surface 111c and a second surface 111d, and the first surface 111c and the second surface 111d are arranged opposite to each other in the Z-axis direction. The first surface 111c faces the inside of the body portion 111, and the second surface 111d faces the outside of the body portion 111.

In this implementation, the side portion 112 includes an inner surface and an outer surface that are disposed opposite to each other. The side portion 112 defines multiple limiting notches 116, the multiple limiting notches 116 each penetrate through the inner surface of the side portion 112 and the outer surface of the side portion 112 in a thickness direction of the side portion 112, and the multiple limiting notches 116 are spaced apart from one other. With the aid of the limiting notch 116, a contact area between the heat-conducting member 11 and the main housing 12 can be increased, and assembling reliability between the heat-conducting member 11 and the main housing 12 can be improved. The limiting notch 116 includes a first limiting sub-notch 116a and a second limiting sub-notch 116b.

The side portion 112 includes two first side sub-portions 114 and two second side sub-portions 115. The two first side sub-portions 114 are disposed opposite to each other in the Y-axis direction. In the X-axis direction, the two second side sub-portions 115 are disposed opposite to each other. Each of the two second side sub-portions 115 and each of the two first side sub-portions 114 are spaced apart from each other. In the Z-axis direction, a height of each second side sub-portion 115 is greater than a height of the first side sub-portion 114. The two first side sub-portions 114 are fixedly connected to the two first side sub-portions 111a respectively and are intersected with the body portion 111. The two second side sub-portions 115 are fixedly connected to the two second end-portions 111b respectively and are intersected with the body portion 111.

In this implementation, each of the two first side sub-portions 114 includes a first inner surface 114a and a first outer surface 114b, and the first inner surface 114a and the first outer surface 114b are disposed opposite to each other in the Y-axis direction. The first inner surface 114a is connected to the first surface 111c of the body portion 111, and the first outer surface 114b is connected to the second surface 111d of the body portion 111.

Each of the two first side sub-portions 114 defines a positioning hole 117 and a first limiting sub-notch 116a. Specifically, the positioning hole 117 is disposed at a side of the first side sub-portion 114 away from the body portion 111, and extends through the first inner surface 114a and the first outer surface 114b in a thickness direction (the Y-axis direction shown in the figure) of the first side sub-portion 114. In this implementation, there are two positioning holes 117, and the two positioning holes 117 are spaced apart from each other in the X-axis direction. Exemplarily, the positioning hole 117 is a strip-shaped hole. Specifically, a length direction of the positioning hole 117 is parallel to the X-axis direction. In some other implementations, the positioning hole 117 may also be a square hole, a circular hole, or other irregular holes. The first limiting sub-notch 116a is defined at a side of the first side sub-portion 114 close to the second side sub-portion 115, extends through the first inner surface 114a and the first outer surface 114b in the thickness direction (the Y-axis direction shown in the figure) of the first side sub-portion 114, and extends through an end surface of the first side sub-portion 114 close to the second side sub-portion 115. In this implementation, there are two first limiting sub-notches 116a, and the two first limiting sub-notches 116a are spaced apart from each other in the X-axis direction.

Each of the two second side sub-portions 115 has a second inner surface 115a and a second outer surface 115b, and the second inner surface 115a and the second outer surface 115b are disposed opposite to each other in the X-axis direction. The second inner surface 115a is connected to the first surface 111c of the body portion 111, and the second outer surface 115b is connected to the second surface 111d of the body portion 111. Each of the two second side sub-portions 115 defines a second limiting sub-notch 116b. Specifically, the second limiting sub-notch 116b is defined at a side of the second side sub-portion 115 close to the first side sub-portion 114, extends through the second inner surface 115a and the second outer surface 115b in a thickness direction (the X-axis direction shown in the figure) of the second side sub-portion 115, and extends through an end surface of the second side sub-portion 115 close to the first side sub-portion 114. In this implementation, there are two groups of second limiting sub-notches 116b, and the two groups of second limiting sub-notches 116b are spaced apart from each other in the Y-axis direction. Specifically, each of the two groups of second limiting sub-notches 116b has two second limiting sub-notches 116b, and the two second limiting sub-notches 116b in each group are spaced apart from each other in the Z-axis direction.

It can be understood that with the aid of both the chamfer 113 and the limiting notch 116 of the heat-conducting member 11, the contact area between the heat-conducting member 11 and the main housing 12 can be increased, the assembling stability of the heat-conducting member 11 and the main housing 12 can be improved, and the heat-conducting member 11 and the main housing 12 are prevented from falling off during actual use.

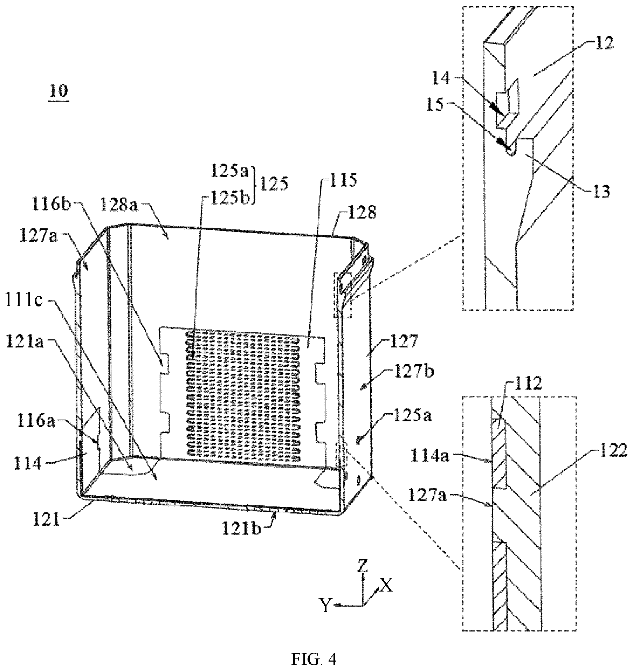

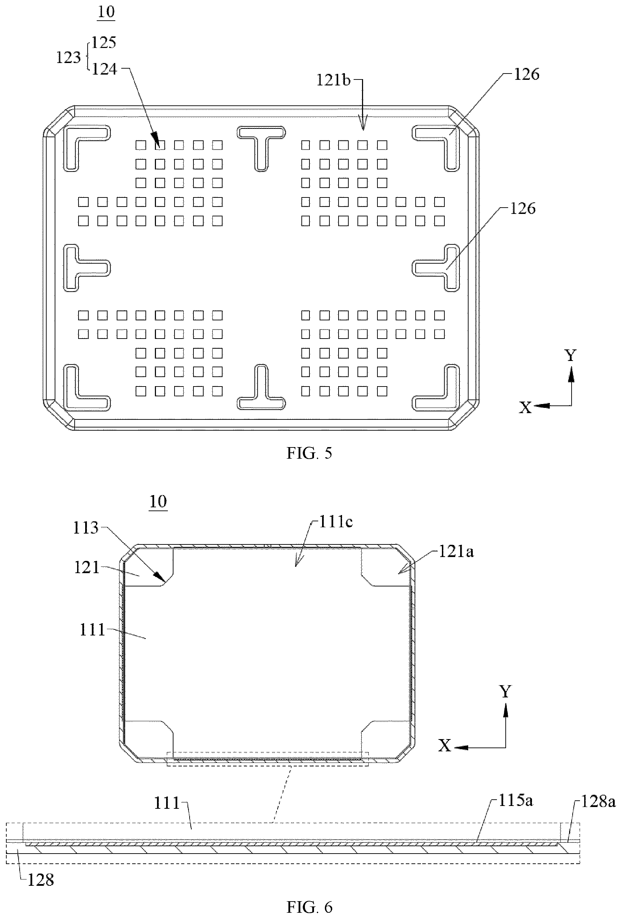

Referring to FIG. 2, FIG. 4, and FIG. 5 together, FIG. 4 is a schematic cross-sectional structural diagram of a lower housing in the protective enclosure illustrated in FIG. 2 cut along A-A, and FIG. 5 is a schematic structural diagram of a lower housing in the protective enclosure illustrated in FIG. 2 from another angle. The "cut along A-A" refers to cutting along a plane where the line A-A is located, and similar description can be similarly understood hereinafter.

In this implementation, the main housing 12 may be made of plastic. The main housing 12 is located at an outer side of the body portion 111 of the heat-conducting member 11. The main housing 12 defines multiple heat-conducting holes 123. The multiple heat-conducting holes 123 each extend through the main housing 12 in the thickness direction of the main housing 12, and the multiple heat-conducting holes are arranged at intervals. The heat-conducting member 11 is exposed beyond each of the multiple heat-conducting holes 123. In other words, the heat-conducting member 11 covers the multiple heat-conducting holes 123. The heat-conducting hole 123 not only has a heat conducting function, but also can be used as a hole for the in-mold injection-molding process, so as to ensure feasibility of the in-mold injection-molding process. The multiple heat-conducting holes 123 include multiple first heat-conducting holes 124 and multiple second heat-conducting holes 125.

The main housing 12 includes a bottom housing 121 and a side housing 122, and the side housing 122 is disposed around an edge of the bottom housing 121 and is fixedly connected to the bottom housing 121. The bottom housing 121 has a third surface 121a and a fourth surface 121b, and the third surface 121a and the fourth surface 121b are disposed opposite to each other in the Z-axis direction. Specifically, the third surface 121a faces the inside of the lower housing 10, and the fourth surface 121b faces the outside of the lower housing 10. The third surface 121a of the bottom housing 121 is flush with the first surface 111c of the body portion 111.

The bottom housing 121 defines the multiple first heat-conducting holes 124. The multiple first heat-conducting holes 124 each extend through the third surface 121a and the fourth surface 121b in the thickness direction (the Z-axis direction shown in the figure) of the bottom housing 121, such that the inside of the main housing 12 communicates with the outside of the main housing 12, and the body portion 111 of the heat-conducting member 11 is exposed beyond the multiple first heat-conducting holes 124. In other words, the body portion 111 covers the multiple first heat-conducting holes 124. The multiple first heat-conducting holes 124 are arranged at intervals. Exemplarily, the first heat-conducting hole 124 is a square hole. In some other implementations, the first heat-conducting hole 124 may also be a circular hole or other irregular holes.

In addition, the bottom housing 121 is provided with multiple support legs 126 on the fourth surface 121b of the bottom housing 121, and the multiple support legs 126 are arranged around an edge of the fourth surface 121b at intervals. Each of the multiple support legs 126 protrudes in a direction away from the fourth face 121b of the bottom housing 121, and outer surfaces of the multiple support legs 126 are flush with one another. It should be understood that the outer surfaces of the multiple support legs 126 are flush with one another, such that the energy-storage apparatus 100 is uniformly lifted as a whole, and a gap can be defined between the bottom housing 121 of the lower housing 10 and a mounting surface of the energy-storage apparatus 100. Therefore, heat inside the energy-storage apparatus 100 can be quickly released to the external environment via the first heat-conducting hole 124, thereby helping to improve heat conduction efficiency of the protective enclosure 110.

Referring to FIG. 2, FIG. 4, and FIG. 6 together, FIG. 6 is a schematic cross-sectional structural diagram of a lower housing in the protective enclosure illustrated in FIG. 2 cut along B-B.

The side housing 122 is outside the side portion 112 of the heat-conducting member 11. The side housing 122 has an inner side-surface and an outer side-surface, and the inner side-surface and the outer side-surface are disposed opposite to each other. The inner side-surface of the side housing 122 is flush with an inner surface of the side portion 112. The side housing 122 defines the multiple second heat-conducting holes 125, and the multiple second heat-conducting holes 125 each extend through the inner side-surface and the outer side-surface in a thickness direction of the side housing 122, such that the inside of the main housing 12 communicates with the outside of the main housing 12, and the side portion 112 of the heat-conducting member 11 is exposed beyond the multiple second heat-conducting holes 125. The multiple second heat-conducting holes 125 include first sub-holes 125a and second sub-holes 125b.

The side housing 122 includes two first side sub-plates 127 and two second side sub-plates 128. The two first side sub-plates 127 are disposed opposite to each other in the Y-axis direction. The two second side sub-plates 128 are disposed opposite to each other in the X-axis direction. The two second side sub-plates 128 each are connected between the two first side sub-plates 127.

In this implementation, each of the two first side sub-plates 127 has a first inner side-surface 127a and a first outer side-surface 127b, and the first inner side-surface 127a and the first outer side-surface 127b are disposed opposite to each other in the Y-axis direction. Specifically, the first inner side-surface 127a is connected to the third surface 121a of the bottom housing 121, and the first outer side-surface 127b is connected to the fourth surface 121b of the bottom housing 121. The first inner side-surface 127a of the first side sub-plate 127 is flush with the first inner surface 114a of the first side sub-portion 114.

Each of the two first side sub-plates 127 defines multiple first sub-holes 125a at one side of each of the two first side sub-plates 127 close to the bottom housing 121, and the multiple first sub-holes 125a each extend through the first inner side-surface 127a and the first outer side-surface 127b in the thickness direction (the Y-axis direction shown in the figure) of each of the two first side sub-plates 127, such that the inside of the main housing 12 communicates with the outside of the main housing 12, and the first side sub-portion 114 of the heat-conducting member 11 is exposed beyond the multiple first sub-holes 125a. The multiple first sub-holes 125a are arranged at intervals. In other words, the first side sub-portion 114 covers the multiple first sub-holes 125a. Exemplarily, the first sub-hole 125a is a circular hole. In other implementations, the first sub-hole 125a may also be a square hole or other irregular holes.

It should be noted that in an actual situation, part of the first side sub-plate 127 away from the bottom housing 121 is generally used to provide other structures such as an interface, and therefore, the multiple first sub-holes 125a are collectively defined in the part of each of the two first side sub-plates 127 close to the bottom housing 121, but it should be understood that the present invention is not limited thereto.

Each of the two second side sub-plates 128 has a second inner side-surface 128a and a second outer side-surface 128b, and the second inner side-surface 128a and the second outer side-surface 128b are disposed opposite to each other in the X-axis direction. Specifically, the second inner surface 128a is connected to the third surface 121a of the bottom housing 121, and the second outer surface 128b is connected to the fourth surface 121b of the bottom housing 121. The second inner surface 128a of the second side sub-plate 128 is flush with the second inner surface 115a of the second side sub-portion 115.

Each of the two second side sub-plates 128 defines multiple second sub-holes 125b at part of each of the two second side sub-plates 128 close to the bottom housing 121, and the multiple second sub-holes 125b each extend through the second inner side-surface 128a and the second outer side-surface 128b in the thickness direction (the X-axis direction shown in the figure) of the second side sub-plate 128, such that the inside of the main housing 12 communicates with the outside of the main housing 12, and the second side sub-portion 115 of the heat-conducting member 11 is exposed beyond the multiple second sub-holes 125b. The multiple second sub-holes 125b are arranged at intervals. In other words, the second side sub-portion 115 covers the multiple second sub-holes 125b. Exemplarily, the second sub-hole 125b is a strip-shaped hole. Specifically, the second sub-hole 125b extends in the Y-axis direction. In some other implementations, the second sub-hole 125b may also be a circular hole, a square hole, or other irregular holes.

In this implementation, after the heat-conducting member 11 is integrated with the main housing 12 by the in-mold injection-molding process, an inner surface of the main housing 12 is flush with an inner surface of the heat-conducting member 11, such that the lower housing 10 has no significantly protruding structure inside the lower housing 10, which cannot only ensure that the cell unit is stably fixed in the lower housing 10, but also ensure a mounting space of the cell unit, thereby avoiding damage caused by collision between the cell unit and the heat-conducting member 11 during mounting. In addition, the heat-conducting member 11 covers the multiple heat-conducting holes 123 of the main housing 12, and the heat-conducting member 11 is exposed to air by means of the multiple heat-conducting holes 123. Heat generated by the cell unit is transferred to the external environment by means of the heat-conducting member 11 and the multiple heat-conducting holes 123, thereby avoiding heat accumulation inside the energy-storage apparatus 100, prolonging the service life of the energy-storage apparatus 100, and further improving the usage reliability of the electricity-consumption device.

Referring to FIG. 2 and FIG. 4 again, the main housing 12 further includes a first boss 13, the first boss 13 is disposed at the top side of the main housing 12 and around the periphery of the main housing 12. In the Z-axis direction, a top surface of the first boss 13 is lower than the top surface of the main housing 12. In other implementations, the top surface of the first boss 13 may also be flush with the top surface of the main housing 12. The first boss 13 defines an overflow groove 15, an opening of the overflow groove 15 is on the top surface of the first boss 13, and the overflow groove 15 is defined around the periphery of the main housing 12. The overflow groove 15 may accommodate a sealant to prevent the sealant from overflowing the protective enclosure 110.

The main housing 12 is further provided with a first locking portion 14. Specifically, the first locking portion 14 is disposed on the outer surface of the main housing 12 and between the top surface of the main housing 12 and the top surface of the first boss 13. In this implementation, there are multiple first locking portions 14, and the multiple first locking portions 14 are arranged around the periphery of the main housing 12 at intervals. Exemplarily, the first locking portion 14 is a slot. Specifically, openings of the multiple first locking portions 14 are all on the outer surface of the main housing 12, and the multiple first locking portions 14 each are recessed from the outer surface of the main housing 12 towards the inner surface of the main housing 12. In some other implementations, the first locking portion 14 may also be a handle.

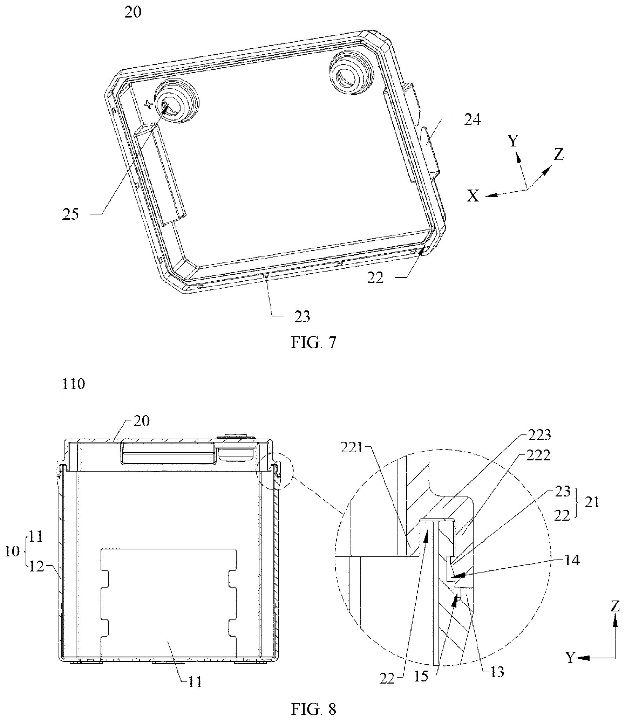

Referring to FIG. 2, FIG. 7, and FIG. 8, FIG. 7 is a schematic structural diagram of an upper housing in the protective enclosure illustrated in FIG. 2 from another angle, and FIG. 8 is a structural cross-sectional schematic diagram of the energy-storage apparatus illustrated in FIG. 1 cut along C-C.

The upper housing 20 is provided with a second boss 21, and the second boss 21 is disposed at a bottom side of the upper housing 20 and around a periphery of the upper housing 20. The second boss 21 defines a gluing groove 22 and is provided with a second locking portion 23. Specifically, an opening of the gluing groove 22 is on a bottom surface of the second boss 21, and the gluing groove 22 is defined around the periphery of the upper housing. The gluing groove 22 has a first groove side-wall 221, a second groove side-wall 222, and a groove bottom-wall 223. The first groove side-wall 221 and the second groove side-wall 222 are spaced apart from and opposite to each other. The groove bottom-wall 223 is connected between the first groove side-wall 221 and the second groove side-wall 222. The second locking portion 23 is disposed on the second groove side-wall 222. In this implementation, there are multiple second locking portions 23, and the multiple second locking portions 23 are arranged around the periphery of the upper housing 20 at intervals. Exemplarily, the second locking portion 23 is a protrusion. Specifically, the second locking portion 23 protrudes from the second groove side-wall 222 to the first groove side-wall 221. In some other implementations, the second locking portion 23 may also be a slot.

The upper housing 20 is further provided with two handles 24 and defines two mounting holes 25. In the X-axis direction, the two handles 24 are disposed at two opposite sides of the upper housing 20 respectively. The two handles 24 can improve portability of the energy-storage apparatus 100. The two mounting holes 25 are defined between the two handles 24, and the two mounting holes 25 are spaced apart from each other in the X-axis direction. Specifically, each of the two mounting holes 25 penetrates through the upper housing 20 in the thickness direction (the Z-axis direction shown in the figure) of the upper housing 20. The two mounting holes 25 are used to mount the positive terminal 120 and the negative terminal 130 respectively.

Specifically, when the upper housing 20 is detachably mounted at the top side of the main housing 12, the bottom surface of the second boss 21 is configured to abut against the top surface of the first boss 13. The first groove side-wall 221 of the gluing groove 22 is spaced apart from the inner surface of the main housing 12, the second groove side-wall 222 of the gluing groove 22 is spaced apart from the outer surface of the main housing 12, and the groove bottom-wall 223 of the gluing groove 22 is spaced apart from the top surface of the main housing 12. The multiple first locking portions 14 are detachably interlocked with the multiple second locking portions 23 in a one-to-one correspondence.

It should be understood that the overflow groove 15 may accommodate the sealant overflowing from the gluing groove 22 to prevent the sealant from overflowing the protective enclosure 110 when the gluing groove 22 is squeezed, which helps to simplify a production process of the protective enclosure 110. In addition, during curing of the sealant, the upper housing 20 may be interlocked with and fixed to the lower housing 10 by using the first locking portion 14 and the second locking portion 23, such that the sealant is cured without fixing the upper housing 20 and the lower housing 10 by a strap. In this way, the upper housing 20 and the lower housing 10 can be prevented from being separated from each other due to the tension of the sealing adhesive, such that production efficiency of the protective enclosure 110 can be improved, an occupied area of a production site can be reduced, and waste of resources can be avoided.

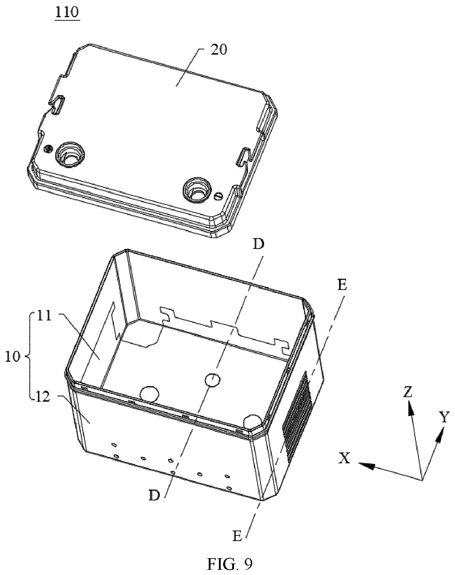

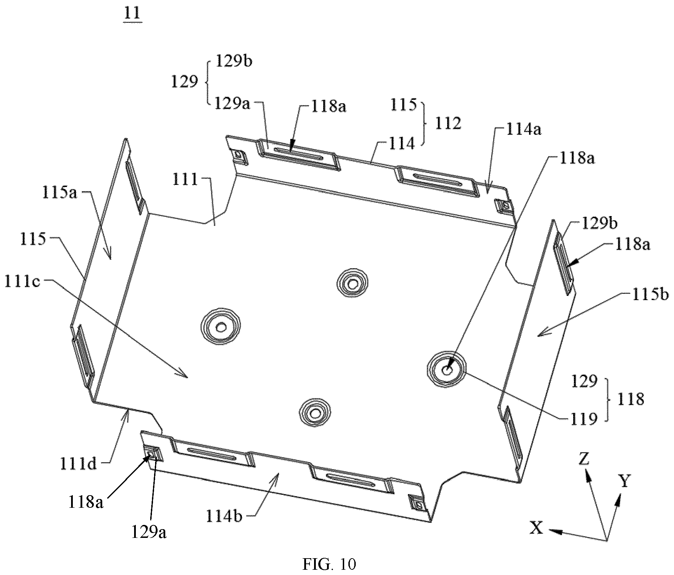

Referring to FIG. 9 and FIG. 10, FIG. 9 is an exploded schematic structural diagram of a protective enclosure 110 of the energy-storage apparatus 100 illustrated in FIG. 1 in another implementation, and FIG. 10 is a structural schematic diagram of a heat-conducting member 11 of the lower housing 10 in the protective enclosure 110 illustrated in FIG. 9.

The difference between the lower housing 10 illustrated in this implementation and the lower housing 10 illustrated in the above implementation in FIG. 2 is that the heat-conducting member 11 defines multiple recesses 118, and the multiple recesses 118 each are recessed from the inner surface of the heat-conducting member 11 towards the outer surface of the heat-conducting member 11, and are arranged at intervals. The multiple recesses 118 each are completely in the main housing 12 and between the inner surface of the main housing 12 and the outer surface of the main housing 12. Each of the multiple recesses 118 defines a through hole 118a, the through hole 118a extends through the recess 118 in the thickness direction of the recess 118, and part of the main housing 12 passes through the through hole 118a. The multiple recesses 118 includes multiple first recesses 119 and multiple second recesses 129.

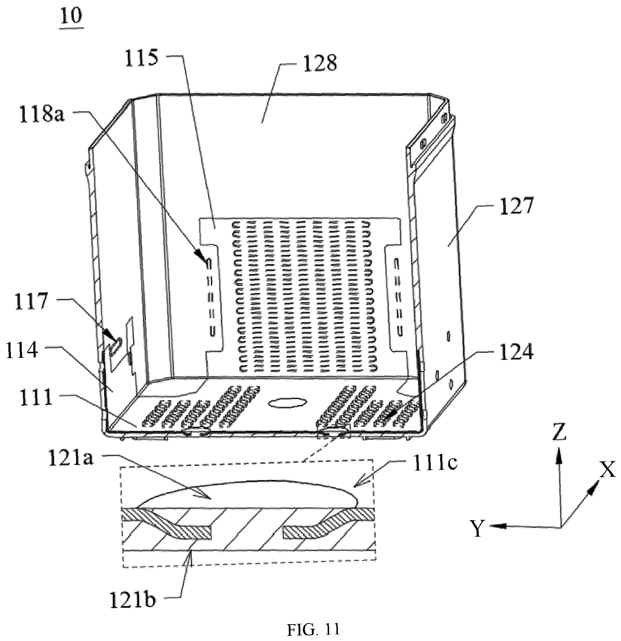

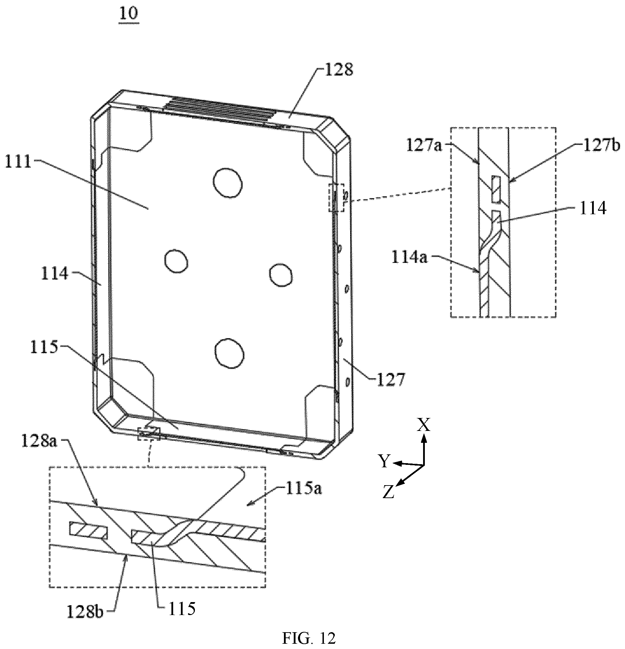

Referring to FIG. 10, FIG. 11, and FIG. 12 together, FIG. 11 is a schematic cross-sectional structural diagram of a lower housing 10 in the protective enclosure 110 in FIG. 9 cut along D-D, and FIG. 12 is a schematic cross-sectional structural diagram of a lower housing 10 in the protective enclosure 110 in FIG. 9 cut along E-E.

In this implementation, the body portion 111 of the heat-conducting member 11 defines multiple first recesses 119, the multiple first recesses 119 each are recessed from the first surface 111c towards the second surface llld, and the multiple first recesses 119 are arranged at intervals. The first recess 119 is completely in the bottom housing 121, and is between the third surface 121a of the bottom housing 121 and the fourth surface 121b of the bottom housing 121. The third surface 121a of the bottom housing 121 is flush with the first surface 111c of the body portion 111, and a partial structure of the bottom housing 121 penetrates through a through hole 118a of the first recess119.

The side portion 112 of the heat-conducting member 11 defines multiple second recesses 129, the multiple second recesses 129 each are recessed from an inner surface of the side portion 112 towards the outer surface of the side portion 112, and the multiple second recesses 129 are arranged at intervals. The second recess 129 includes a first sub-recess 129a and a second sub-recess 129b.

The first sub-recess 129a is defined at a side of the first side sub-portion 114 close to the second side sub-portion 115 and is recessed from the first inner surface 114a of the first side sub-portion 114 towards the first outer surface 114b of the first side sub-portion 114. The first sub-recess 129a is completely in the first side sub-plate 127 and is between the first inner side-surface 127a of the first side sub-plate 127 and the first outer side-surface 127b of the first side sub-plate 127. The first inner side-surface 127a of the first side sub-plate 127 is flush with the first inner surface 114a of the first side sub-portion 114, and a partial structure of the first side sub-plate 127 passes through the through hole 118a of the first sub-recess 129a. In this implementation, for each of the two first side sub-portions 114, there are four first sub-recesses 129a, two first sub-recesses 129a are respectively defined at two opposite sides of the first side sub-portion 114 in the X-axis direction, and the other two first sub-recesses 129a are spaced apart from each other at a side of the first side sub-portion 114 away from the body portion 111.

The second sub-recess 129b is defined at a side of the second side sub-portion 115 close to the first side sub-portion 114, and are recessed from the second inner surface 115a of the second side sub-portion 115 towards the second outer surface 115b of the second side sub-portion 115. The second sub-recess 129b is completely in the second side sub-plate 128 and is between the second inner surface 128a of the second side sub-plate 128 and the second outer surface 128b of the second side sub-plate 128. The second inner surface 128a of the second side sub-plate 128 is flush with the second inner surface 115a of the second side sub-portion 115, and a partial structure of the second side sub-plate 128 passes through the through hole 118a of the second sub-recess 129b. In this implementation, for each of the two second side sub-portions 115, there are two second sub-recesses 129b, and the two second sub-recesses 129b are spaced apart from each other in the Y-axis direction.

It can be understood that, by defining the multiple recesses 118 in the heat-conducting member 11 and defining the through hole 118a in each of the multiple recesses 118, the contact area between the heat-conducting member 11 and the main housing 12 can be increased, and the assembling stability of the heat-conducting member 11 and the main housing 12 can be further improved.

In the protective enclosure 110 provided in the present disclosure, the heat-conducting member 11 is integrated with the main housing 12 by injection, and the heat-conducting holes 123 are defined in the main housing 12. On the one hand, the heat-conducting member 11 can improve structural strength of the lower housing 10 to ensure a protective performance of the protective enclosure 110; and on the other hand, the heat-conducting member 11 has good thermal conductivity, and can quickly conduct the heat inside the energy-storage apparatus 100 to the external environment via the heat-conducting holes 123, such that heat dissipation efficiency of the protective enclosure 110 can be improved, the service life of the energy-storage apparatus 100 can be prolonged, and the usage reliability of the electricity-consumption device can be improved. On this basis, by defining the recess 118 in the heat-conducting member 11 and defining the through hole 118a in the recess 118, the contact area between the heat-conducting member 11 and the main housing 12 is increased, thereby further improving connection reliability of the heat-conducting member 11 and the main housing 12, and preventing the heat-conducting member 11 from falling off and separating from the main housing 12.

Implementations of the present disclosure are introduced in detail above, specific examples are used in the present disclosure to set forth the principle and implementations of the present disclosure, and the description of the above implementations is only used to help understand the method of the present disclosure and the core idea thereof. In the meanwhile, those of ordinary skill in the art may make modifications to specific implementations and application scopes according to the idea of the present disclosure. In conclusion, the content of the description shall not be construed as a limitation to the present disclosure

## Claims

1. A protective enclosure (110), applied to an energy-storage apparatus (100) and comprising a main housing (12) and a heat-conducting member (11), wherein the main housing (12) defines a heat-conducting hole (123), the heat-conducting holes (123) extends through the main housing (12) in a thickness direction of the main housing (12), and the heat-conducting member (11) is mounted at an inner side of the main housing (12), is integrated with the main housing (12), and covers the heat-conducting hole (123).

2. The protective enclosure (110) of claim 1, wherein an inner surface of the heat-conducting member (11) is flush with an inner surface of the main housing (12).

3. The protective enclosure (110) of claim 1 or 2, wherein the heat-conducting hole (123) is implemented as a plurality of heat-conducting holes (123) arranged at intervals, the plurality of heat-conducting holes (123) comprise a plurality of first heat-conducting holes (124) and a plurality of second heat-conducting holes (125);
the main housing (12) comprises a bottom housing (121) and a side housing (122), the bottom housing (121) defines the plurality of first heat-conducting holes (124), the side housing (122) is disposed around the bottom housing (121) and is fixedly connected to the bottom housing (121), the side housing (122) defines the plurality of second heat-conducting holes (125), and the plurality of second heat-conducting holes (125) are defined at part of the side housing (122) close to the bottom housing (121); and
the heat-conducting member (11) comprises a body portion (111) and a side portion (112), wherein the body portion (111) is mounted at an inner side of the bottom housing (121) and covers the plurality of first heat-conducting holes (124), and the side portion (112) is disposed around the body portion (111), is mounted at an inner side of the side housing (122), and covers the plurality of second heat-conducting hole (125).

4. The protective enclosure (110) of claim 3, wherein the body portion (111) is in a shape of a Chinese character " 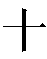 ", the body portion (111) comprises two first end-portions (111a) and two second end-portions (111b), the two first end-portions (111a) are disposed opposite to each other, and the two second end-portions (111b) are disposed opposite to each other and between the two first end-portions (111a); and
the side portion (112) comprises two first side sub-portions (114) and two second side sub-portions (115), wherein the two first side sub-portions (114) are fixedly connected to the two first end-portions (111a) respectively and are intersected with the body portion (111), and the two second side sub-portions (115) are fixedly connected to the two second end-portions (111b) respectively and are intersected with the body portion (111).

5. The protective enclosure (110) of claim 1, wherein the heat-conducting member (11) defines a recess (118), the recess (118) is recessed from an inner surface of the heat-conducting member (11) towards an outer surface of the heat-conducting member (11), and the recess (118) is completely in the main housing (12) and is between an inner surface of the main housing (12) and an outer surface of the main housing (12).

6. The protective enclosure (110) of claim 5, wherein the recess (118) defines a through hole (118a), the through hole (118a) extends through the recess (118) in a thickness direction of the recess (118), and part of the main housing (12) passes through the through hole (118a).

7. The protective enclosure (110) of claim 1, further comprising an upper housing (20), wherein the upper housing (20) is detachably mounted at a top side of the main housing (12).

8. The protective enclosure (110) of claim 7, wherein the main housing (12) is provided with a first boss (13), the first boss (13) is disposed at the top side of the main housing (12) and around a periphery of the main housing (12), the first boss (13) defines an overflow groove (15), an opening of the overflow groove (15) is on a top surface of the first boss (13), and the overflow groove (15) is defined around the periphery of the main housing (12);
the upper housing (20) is provided with a second boss (21), the second boss (21) is disposed at a bottom side of the upper housing (20) and around a periphery of the upper housing (20), the second boss (21) defines a gluing groove (22), and an opening of the gluing groove (22) is on a bottom surface of the second boss (21), the gluing groove (22) is defined around the periphery of the upper housing (20), the gluing groove (22) has a first groove side-wall (221), a second groove side-wall (222), and a groove bottom-wall (223), the first groove side-wall (221) and the second groove side-wall (222) are spaced apart from and opposite to each other, and the groove bottom-wall (223) is connected between the first groove side-wall (221) and the second groove side-wall (222); and
when the upper housing (20) is detachably mounted at the top side of the main housing (12), the bottom surface of the second boss (21) is configured to abut against the top surface of the first boss (13), the first groove side-wall (221) is spaced apart from an inner surface of the main housing (12), the second groove side-wall (222) is spaced apart from an outer surface of the main housing (12), and the groove bottom-wall (223) is spaced apart from a top surface of the main housing (12).

9. The protective enclosure (110) of claim 8, wherein the main housing (12) is provided with a first locking portion (14), and the first locking portion (14) is disposed at the outer surface of the main housing (12) and between the top surface of the main housing (12) and the top surface of the first boss (13);
the second boss (21) is provided with a second locking portion (23), and the second locking portion (23) is disposed at the second groove side-wall (222); and
when the upper housing (20) is detachably mounted at the top side of the main housing (12), the first locking portion (14) and the second locking portion (23) are detachably interlocked with each other.

10. The protective enclosure (110) of claim 9, wherein the first locking portion (14) is implemented as a plurality of first locking portions (14), and the plurality of first locking portions (14) are disposed around the periphery of the main housing (12) at intervals;
the second locking portion (23) is implemented as a plurality of second locking portions (23), and the plurality of second locking portions (23) are disposed around a periphery of the upper housing (20) at intervals; and
when the upper housing (20) is detachably mounted at the top side of the main housing (12), the plurality of first locking portions (14) are detachably interlocked with the plurality of second locking portions (23) in a one-to-one correspondence.

11. The protective enclosure (110) of claim 9 or 10, wherein the first locking portion (14) is a slot, an opening of the slot is on the outer surface of the main housing (12), the second locking portion (23) is a protrusion protruding from the second groove side-wall (222) to the first groove side-wall (221); and
when the upper housing (20) is detachably mounted at the top side of the main housing (12), the protrusion is detachably snapped into the slot.

12. The protective enclosure (110) of claim 7, wherein the upper housing (20) is provided with two handles (24), and the two handles (24) are disposed at two opposite sides of the upper housing (20) respectively.

13. The protective enclosure (110) of claim 1, wherein the main housing (12) is made of plastic, and the heat-conducting member (11) is made of a metal material.

14. An energy-storage apparatus (100), comprising a plurality of cells and the protective enclosure (110) of any one of claims 1 to 13, wherein the plurality of cells are mounted at an inner side of the protective enclosure (110) and in contact with the heat-conducting member (11).

15. An electricity-consumption device, comprising the energy-storage apparatus (100) of claim 14.
